# EUROPÄISCHE PATENTANMELDUNG

(11) **EP 1 070 794 A2**
(43) Veröffentlichungstag der Anmeldung: **24.01.2001**
(21) Anmeldenummer: 00114724.8
(22) Anmeldetag: 08.07.2000
(51) Int. Cl.: E03B 3/03

(54) **Anlage zur Nutzung von Regenwasser**

(30) Priorität: 22.07.1999 DE 19934330
(71) Anmelder: KSB Aktiengesellschaft, 67227 Frankenthal (DE)
(72) Erfinder: Rupprecht, Peter, 95445 Bayreuth (DE)

(57) **Zusammenfassung**

Gegenstand der Erfindung ist eine Anlage zur Nutzung von Regenwasser, mit einem Regenwasserspeicher und einer Einrichtung zur Nachspeisung von Trinkwasser bei Regenwassermangel, einer Pumpe zur Förderung des im Regenwasserspeicher gesammelten Wassers bzw. des nachgespeisten Trinkwassers, zugehörigen Rohrleitungen und Armaturen sowie einer Einrichtung zur Regelung der Trinkwassernachspeisung und der Umstellung von Regenwasser- auf Trinkwasserförderung.

Eine Anlage, die keiner elektrischen Steuerung und keiner motorbetätigten Ventile bedarf, wird erfindungsgemäß geschaffen durch
a) einen Saugkasten (2), in welchen Regenwasser aus dem Regenwasserspeicher gesaugt wird und aus welchem die Pumpe (4) fördert, wobei der Saugkasten (2) eine durch ein Schwimmerventil (14) zu verschließende Nachfüllöffnung (13) für Trinkwasser besitzt, die bei einem Absinken des Flüssigkeitsstandes auf eine vorgegebene Minimalhöhe (16) geöffnet wird,
b) einen oberhalb des Saugkastens (2) angeordneten Trinkwassernachspeisebehälter (3), der mit Hilfe eines durch einen Schwimmer (10) gesteuerten Ventils (11) bis zu einer vorgegebenen Maximalhöhe (19) mit Trinkwasser gefüllt wird, wobei dessen Inhalt über die Nachfüllöffnung (13) in den Saugkasten (2) abgegeben wird.

## Beschreibung

Die Erfindung betrifft eine Anlage zur Nutzung von Regenwasser, mit einem Regenwasserspeicher und einer Einrichtung zur Nachspeisung von Trinkwasser bei Regenwassermangel, einer Pumpe zur Förderung des im Regenwasserspeicher gesammelten Wassers bzw. des nachgespeisten Trinkwassers, zugehörigen Rohrleitungen und Armaturen sowie einer Einrichtung zur Regelung der Trinkwassernachspeisung und der Umstellung von Regenwasser- auf Trinkwasserförderung.

In derartigen Anlagen werden meist selbstansaugende Pumpen eingesetzt, die Wasser aus dem Regenwasserspeicher saugen und zu einem oder mehreren Verbrauchern fördern. Ist der Regenwasserspeicher leer, wird dies durch ein Signal an eine Steuerung weitergemeldet, die dann durch Umschalten von Ventilen die Pumpe mit einem Trinkwasserspeicher verbindet oder die dafür sorgt, daß Trinkwasser in den Regenwasserspeicher nachläuft. Die für die geschilderten Funktionen notwendige elektrische Steuerung und die durch Motoren zu betätigenden Ventile stellen einen erheblichen Teil des für eine solche Anlage zu treibenden Aufwands dar.

Der Erfindung liegt die Aufgabe zugrunde, eine Anlage der eingangs genannten Art zu schaffen, die mit geringem Aufwand, also ohne Rückmeldung aus dem Regenwasserspeicher, ohne elektrische Steuerung und ohne motorbetätigte Ventile die notwendigen Steuerfunktionen erfüllt, wobei in der Anlage auch eine normal saugende Pumpe einsetzbar sein soll.

Die gestellte Aufgabe wird erfindungsgemäß gelöst durch
a) einen Saugkasten, in welchen Regenwasser aus dem Regenwasserspeicher gesaugt wird und aus welchem die Pumpe fördert, wobei der Saugkasten eine durch ein Schwimmerventil zu verschließende Nachfüllöffnung für Trinkwasser besitzt, die bei einem Absinken des Flüssigkeitsstandes auf eine vorgegebene Minimalhöhe geöffnet wird,
b) einen oberhalb des Saugkastens angeordneten Trinkwassernachspeisebehälter, der mit Hilfe eines durch einen Schwimmer gesteuerten Ventils bis zu einer vorgegebenen Maximalhöhe mit Trinkwasser gefüllt wird, wobei dessen Inhalt über die Nachfüllöffnung in den Saugkasten abgegeben wird.

Der bei der erfindungsgemäßen Anlage verwendete Saugkasten stellt sicher, daß jederzeit genügend Wasser zur Verfügung steht und unmittelbar nach dem Einschalten der Pumpe zu den Verbrauchern gefördert wird. Die Pumpe kann in oder an dem Saugkasten angeordnet sein. Dabei ist es zweckmäßig, wenn die Pumpe in bekannter Weise druckabhängig ein- und strömungsabhängig ausgeschaltet wird.

In vorteilhafter Weiterbildung der Erfindung wird vorgeschlagen, daß der Saugkasten und der Trinkwassernachspeisebehälter innerhalb eines gemeinsamen Gehäuses angeordnet sind, wobei die Nachfüllöffnung in einer den Saugkasten von dem Trinkwassernachspeisebehälter trennenden Wand vorgesehen ist.

Eine andere vorteilhafte Ausführung der erfindungsgemäßen Anlage sieht vor, daß der Saugkasten im Regenwasserspeicher angeordnet ist, wobei eine ebenfalls im Regenwasserspeicher angeordnete Tauchmotorpumpe der Förderung von Regenwasser bzw. Trinkwasser dient und wobei der Trinkwassernachspeisebehälter oberhalb der Rückstauebene des Regenwasserspeichers vorgesehen und über eine Falleitung mit der Nachfüllöffnung des Saugkastens verbunden ist.

Bei einem im Regenwasserspeicher angeordneten Saugkasten muß das Schwimmerventil zum Öffnen und zum Verschließen der Nachfüllöffnung nicht innerhalb des Saugkastens angeordnet sein. Es kann ebenso gut im Regenwasserspeicher vorgesehen werden. Hierdurch laßt sich die Gestaltung des Saugkastens vereinfachen und dessen Volumen besser nutzen.

Der erfindungsgemäß vorgesehene Saugkasten bietet in vorteilhafter Weise auch die Möglichkeit, den Wasserstand im Regenwasserspeicher anzuzeigen, ohne daß hierfür eine der Größe des Regenwasserspeichers angemessene und entsprechend aufwendige Einrichtung benötigt würde.

So wird vorgeschlagen, für die Anzeige der Füllstandshöhe des Regenwasserspeichers ein Gerät zu verwenden, dessen Anzeige auf einer während des Betriebes der Pumpe erfolgenden Messung des Wasserstandes oder des Unterdruckes im Saugkasten basiert.

Hierbei wird die Tatsache genutzt, daß während des Pumpenbetriebes einem maximalen Wasserstand bzw. einem minimalen Unterdruck im Saugkasten ein maximaler Wasserstand im Regenwasserspeicher entspricht, während einem minimalen Wasserstand bzw. einem maximalen Unterdruck im Saugkasten ein minimaler Wasserstand im Regenwasserspeicher entspricht. Ebenso entsprechen alle zwischen den beiden Endwerten liegenden Zwischenwerte einander, so daß die Anzeige ohne weiteres in beliebig viele Teile gegliedert werden kann.

Anhand zweier Ausführungsbeispiele wird die Erfindung näher erläutert. Es zeigt
- Fig. 1: die wesentlichen Teile einer erfindungsgemäßen Anlage zur Nutzung von Regenwasser, mit einem Saugkasten und einen Trinkwassernachspeisebehälter, die in einem gemeinsamen Gehäuse angeordnet sind;
- Fig. 2: eine weitere erfindungsgemäße Anlage, bei welcher der Saugkasten im Regenwasserspeicher und der Trinkwassernachspeisebehälter oberhalb der Rückstauebene des Regenwasserspeichers angeordnet ist.

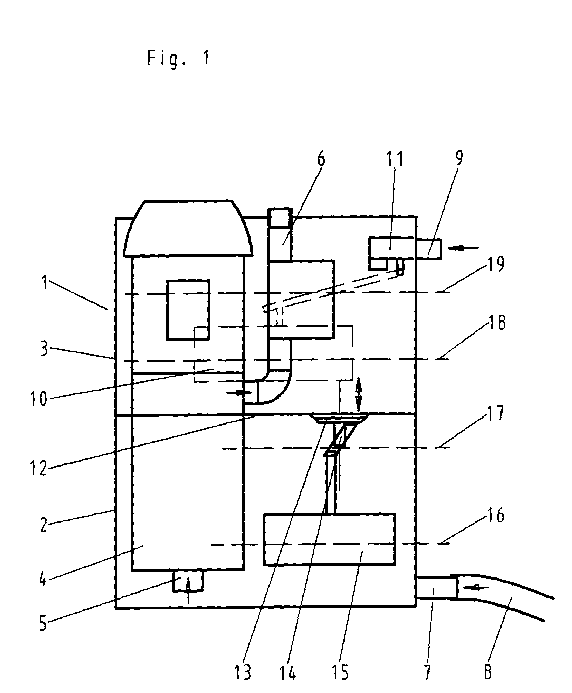

Das in der Fig. 1 dargestellte Gehäuse 1 nimmt einen Saugkasten 2 und einen darüber angeordneten Trinkwassernachspeisebehälter 3 auf. Innerhalb des Gehäuses 1 ist eine normal saugende Kreiselpumpe 4 angeordnet, deren Einlauf 5 sich im unteren Bereich des Saugkastens 2 befindet. Die Druckleitung 6 der Kreiselpumpe 4 führt im Bereich des Trinkwassernachspeichebehälters 3 aus dem Gehäuse 1 heraus.

Das Gehäuse 1 verfügt über zwei Zuflüsse:

Im unteren Bereich des Saugkastens 2 ist ein Saugstutzen 7 vorgesehen, an den eine von einem - nicht dargestellten - Regenwasserspeicher kommende Saugleitung 8 angeschlossen ist.

Im oberen Bereich des Trinkwassernachspeisebehälters 3 ist ein mit einer Trinkwasserleitung 9 verbundenes, durch einen Schwimmer 10 gesteuertes Ventil 11 angeordnet.

In der zwischen dem Saugkasten 2 und dem Trinkwassernachspeisebehälter 3 vorhandenen Wand 12 ist eine Nachfüllöffnung 13 vorgesehen, die durch ein Ventil 14 zu verschließen ist. Das Ventil 14 wird, abhängig vom Wasserstand im Saugkasten 2, durch einen Schwimmer 15 geöffnet oder geschlossen.

Nach einem ersten Auffüllen bewegt sich der Wasserstand im Saugkasten 2 zwischen einer Minimalhöhe 16 und einer Maximalhöhe 17, während im Trinkwassernachspeisebehälter 3 die Endwerte durch eine Minimalhöhe 18 und eine Maximalhöhe 19 gesetzt sind.

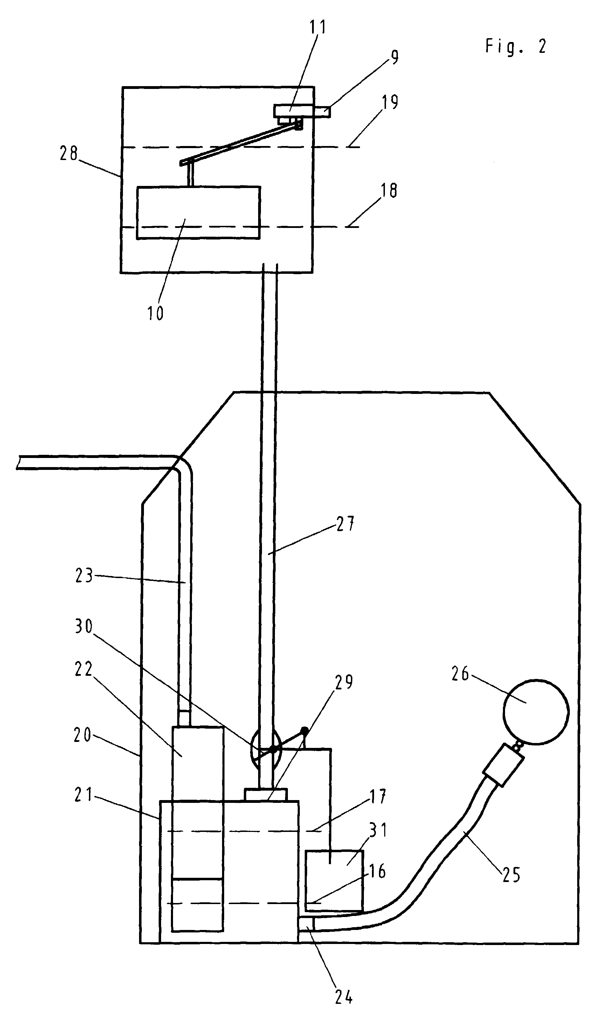

Bei der Ausführung der Fig. 2 ist am Boden eines Regenwasserspeichers 20 ein Saugkasten 21 vorgesehen. In den Saugkasten 21 ragt eine Tauchmotorpumpe 22 hinein, welche über eine Druckleitung 23 Wasser zu einem oder mehreren Verbrauchern fördert. Der Saugkasten 21 besitzt einen Saugstutzen 24, an den eine Saugleitung 25 angeschlossen ist. Um das Ansaugen von etwa vorhandenem Sediment am Boden des Regenwasserspeichers 20 zu verhindern, wird die Saugleitung 25 mit Hilfe eines Schwimmers 26 ständig in einem Abstand vom Boden des Regenwasserspeichers 20 gehalten.

Der Saugkasten 21 ist über eine Falleitung 27 mit einem Trinkwassernachspeisebehälter 28, der sich oberhalb der Rückstauebene des Regenwasserspeichers 20 befindet, verbunden. Die Falleitung 27 mündet in eine Nachfüllöffnung 29 des Saugkastens 21. In der Falleitung 27 ist ein Ventil 30 vorgesehen, das dem Öffnen und Verschließen der Nachfüllöffnung 29 dient. Die Betätigung des Ventils 30 erfolgt durch einen Schwimmer 31, der im Regenwasserspeicher 20 angeordnet ist. Die Dimension und damit die Schließkraft des Schwimmers 31 ist auf die auf dem Ventil 30 lastende Wassersäule abgestimmt.

Der Trinkwassernachspeisebehälter 28 der Fig. 2 ist, wie der entsprechende Behälter 3 der Fig. 1, an eine Trinkwasserleitung 9 angeschlossen. Auch hier wird ein Ventil 11 durch einen Schwimmer 10 in Abhängigkeit des Wasserstandes im Trinkwassernachspeisebehälter 28 gesteuert. Die miminalen und maximalen Wasserstände 16 bis 19 im Saugkasten 21 und im Trinkwassernachspeisebehälter 28 entsprechen prinzipiell den für die Fig. 1 angegebenen Grenzwasserständen.

Die Funktionsweise der in den Fig. 1 und 2 dargestellten Anlagen ist folgende:

Bei Anlagenstillstand befindet sich das Wasser im Saugkasten 2 bzw. 21 auf der Maximalhöhe 17 und im Trinkwassernachspeisebehälter 3 bzw. 28 auf der Maximalhöhe 19. Sobald die Pumpe 4 bzw. 22 eingeschaltet wird, saugt das System über die Saugleitung 8 bzw. 25 Wasser aus dem Regenwasserspeicher 20 in den Saugkasten 2 bzw. 21. Solange der Regenwasserspeicher 20 Wasser liefert, wiederholt sich dieser Vorgang nach jedem Einschalten der Pumpe 4 bzw. 22.

Ist der Regenwasserspeicher 20 entleert und kann somit die Pumpe 4 bzw. 22 von dort kein Wasser mehr ansaugen, leert sich der Saugkasten 2 bzw. 21 bis auf die Minimalhöhe 16. Der abgesunkene Schwimmer 15 bzw. 31 öffnet das Ventil 11 bzw. 30, über die Nachfüllöffnung 13 bzw. 29 fließt Trinkwasser aus dem Trinkwassernachspeisebehälter 3 bzw. 28 in den Saugkasten 2 bzw. 21. Aufgrund des abgesunkenen Wasserstandes im Trinkwassernachspeisebehälter 3 bzw. 28 öffnet der Schwimmer 10 das Ventil 11, so daß Wasser über die Trinkwasserleitung 9 in den Trinkwassernachspeisebehälter 3 bzw. 28 einlaufen kann.

Somit werden beide Behälter, der Saugkasten 2 bzw. 21 und der Trinkwassernachspeisebehälter 3 bzw. 28 unabhängig vom Wasserstand im Regenwasserspeicher 20 stets aufgefüllt. Vor dem Abschalten der Pumpe 4 bzw. 22 aufgrund fehlenden Verbrauchs wird noch die Maximalhöhe 17 des Wasserstandes im Saugkasten 2 bzw. 21 und die Maximalhöhe 19 im Trinkwassernachspeisebehälter 3 bzw. 28 eingestellt. Dies hat den Vorteil, daß die Anlage bei einem neu einsetzenden Verbrauch sofort die volle Lieferleistung zur Verfügung stellt.

Ein weiterer Vorteil dieser Gestaltung liegt darin, daß die Saugleitung 8 bzw. 25 bei jeder Trinkwassernachspeisung ebenfalls gefüllt wird und damit eventuelle Undichtheiten im Saugsystem ausgeglichen werden.

Schaltet nun die Pumpe 4 bzw. 22 bei einsetzendem Verbrauch wieder ein, wird zunächst Wasser aus dem Saugkasten 2 bzw. 21 in die Druckleitung 6 bzw. 23 gefördert. Mit der Entleerung des Saugkastens 2 bzw. 21 versucht das System, zunächst wieder Wasser aus dem Regenwasserspeicher 20 anzusaugen. Nur wenn dort kein Wasser vorhanden ist, wird in der bereits geschilderten Weise wieder auf die Trinkwassernachspeisung umgeschaltet.

## Patentansprüche

1. Anlage zur Nutzung von Regenwasser, mit einem Regenwasserspeicher und einer Einrichtung zur Nachspeisung von Trinkwasser bei Regenwassermangel, einer Pumpe zur Förderung des im Regenwasserspeicher gesammelten Wassers bzw. des nachgespeisten Trinkwassers, zugehörigen Rohrleitungen und Armaturen sowie einer Einrichtung zur Regelung der Trinkwassernachspeisung und der Umstellung von Regenwasser- auf Trinkwasserförderung, **gekennzeichnet durch**
a) einen Saugkasten (2, 21), in welchen Regenwasser aus dem Regenwasserspeicher (20) gesaugt wird und aus welchem die Pumpe (4, 22) fördert, wobei der Saugkasten (2, 21) eine durch ein Schwimmerventil (14, 30) zu verschließende Nachfüllöffnung (13, 29) für Trinkwasser besitzt, die bei einem Absinken des Flüssigkeitsstandes auf eine vorgegebene Minimalhöhe (16) geöffnet wird,
b) einen oberhalb des Saugkastens (2, 21) angeordneten Trinkwassernachspeisebehälter (3, 28), der mit Hilfe eines durch einen Schwimmer (10) gesteuerten Ventils (11) bis zu einer vorgegebenen Maximalhöhe (19) mit Trinkwasser gefüllt wird, wobei dessen Inhalt über die Nachfüllöffnung (13,29) in den Saugkasten (2, 21) abgegeben wird.

2. Anlage zur Nutzung von Regenwasser nach Anspruch 1, dadurch gekennzeichnet, daß der Saugkasten (2) und der Trinkwassernachspeisebehälter (3) innerhalb eines gemeinsamen Gehäuses (1) angeordnet sind, wobei die Nachfüllöffnung (13) in einer den Saugkasten (2) von dem Trinkwassernachspeisebehälter (3) trennenden Wand (12) vorgesehen ist.

3. Anlage zur Nutzung von Regenwasser nach Anspruch 1, dadurch gekennzeichnet, daß der Saugkasten (21) im Regenwasserspeicher (20) angeordnet ist, wobei eine ebenfalls im Regenwasserspeicher (20) angeordnete Tauchmotorpumpe (22) der Förderung von Regenwasser bzw. Trinkwasser dient und wobei der Trinkwassernachspeisebehälter (28) oberhalb der Rückstauebene des Regenwasserspeichers (20) vorgesehen und über eine Falleitung (27) mit der Nachfüllöffnung (29) des Saugkastens (21) verbunden ist.

4. Anlage zur Nutzung von Regenwasser nach Anspruch 3, dadurch gekennzeichnet, daß das Schwimmerventil (30) zum Öffnen und zum Verschließen der Nachfüllöffnung (29) außerhalb des Saugkastens (21) im Regenwasserspeicher (20) angeordnet ist.

5. Anlage zur Nutzung von Regenwasser nach einem der Ansprüche 1 bis 4, gekennzeichnet durch ein die Füllstandshöhe des Regenwasserspeichers (20) anzeigendes Gerät, dessen Anzeige auf einer während des Betriebes der Pumpe (4, 22) erfolgenden Messung des Wasserstandes im Saugkasten (2, 21) basiert.

6. Anlage zur Nutzung von Regenwasser nach einem der Ansprüche 1 bis 4, gekennzeichnet durch ein die Füllstandshöhe des Regenwasserspeichers (20) anzeigendes Gerät, dessen Anzeige auf einer während des Betriebes der Pumpe (4, 22) erfolgenden Messung des Unterdruckes im Saugkasten (2, 21) basiert.
